**Europäisches Patentamt**

(19) **European Patent Office**

**Office européen des brevets**

(11) Publication number : **0 503 064 B1**

# (12) EUROPEAN PATENT SPECIFICATION

(45) Date of publication of patent specification :
09.08.95 Bulletin 95/32

(51) Int. Cl.⁶ : **H02H 9/06, H01H 85/44**

(21) Application number : **90914413.1**

(22) Date of filing : **27.09.90**

(86) International application number :
**PCT/JP90/01240**

(87) International publication number :
**WO 92/06524 16.04.92 Gazette 92/09**

(54) **SURGE-ABSORBING DEVICE HAVING A PROTECTIVE FUNCTION AGAINST OVER-VOLTAGE AND OVER-CURRENT.**

(43) Date of publication of application :
16.09.92 Bulletin 92/38

(45) Publication of the grant of the patent :
09.08.95 Bulletin 95/32

(84) Designated Contracting States :
**DE FR GB**

(56) References cited :
**JP-A-57 118 328**
**JP-A-60 030 020**
**JP-A-63 018 924**
**JP-A-63 131 421**
**US-A- 4 477 857**
**US-A- 4 538 201**

(73) Proprietor : **MITSUBISHI MATERIALS CORPORATION**
**5-1, 1-choume, Oote-machi**
**Chiyoda-ku, Tokyo (JP)**

(72) Inventor : **YOSHIOKA, Naruo**
**1019, OuazaYokoze**
**Yokoze-machi, Chichibu-gun, Saitama 368 (JP)**
Inventor : **KUMANO, Keisuke**
**Senshin-ryou,**
**17-19, Nishiooi 5-chome**
**Shinagawa-ku, Tokyo 140 (JP)**
Inventor : **SHIBAYAMA, Takashi**
**1014, OuazaYokoze,**
**Yokoze-machi**
**Chichibu-gun, Saitama 368 (JP)**
Inventor : **ITOU, Takaaki**
**1014, OuazaYokoze,**
**Yokoze-machi**
**Chichibu-gun, Saitama 368 (JP)**

(74) Representative : **Jennings, Nigel Robin et al**
**KILBURN & STRODE**
**30 John Street**
**London WC1N 2DD (GB)**

## Description

SPECIFICATION

FIELD OF ART

The present invention relates to a surge absorbing device for protecting a circuit substrate from firing and overheat when overvoltage or overcurrent is applied to the circuit.

BACKGROUND OF THE ART

It is known to use a surge absorber to protect equipment such as a communication line, e.g. a telephone line for telephone and telecopier, or a line for cable television and cable radio and the like, or a device, e.g. a semiconductor device, from a lightening surge.

A protection function of the surge absorber is to protect a communication device connecting communication lines when the communication line interconnects the source line to load overcurrent or overvoltage on the line, which will heat the breaker fuse wire so as to melt the wire, thereby opening the circuit to protect the equipment from the overcurrent and overvoltage. A conventional surge absorber is disclosed in Japanese Patent Publication No.63-11022. Further, Japanese Patent Publication No. 63-205026/1988 discloses that a low melting point metal wire is provided in contact with the surface of a microgap surge absorbing element so that the heat generated by overvoltage or overcurrent discharged in the surge absorbing element will melt easily and rapidly the low melting point wire, thereby opening the circuit. The structure of mounting the low melting point metal wire on the surface of the surge absorbing element is housed within a case of inorganic material.

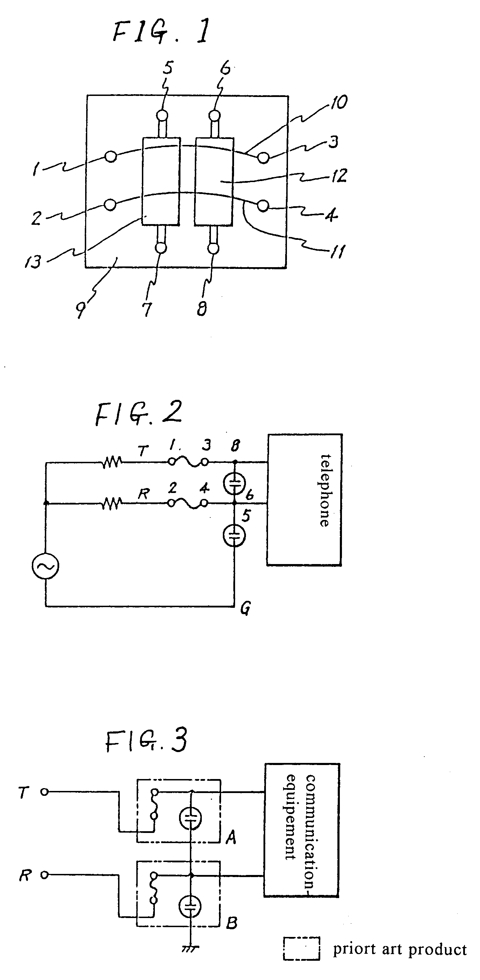

Hereto, such surge absorbing elements with protection function have been individually used in a communication line, or a line to earth. As shown in FIG. 3, a communication equipment is connected to individual surge absorbing elements. For example , when an overvoltage appears through T and R in FIG. 3, the surge absorbing element B firstly discharges to ground so as to melt down the low melting point metal wire corresponding to element B, and subsequently both the surge absorbing elements discharge so as to melt down the low melting point metal wire corresponding to element A. Therefore, it will take about twice the time necessary for one surge absorbing element to melt down its corresponding low melting point metal wire to open the circuit.

US-A- 4 477 857 discloses a surge absorbing device for protecting a communication circuit having a plurality of surge absorbing elements connected to the circuit to be protected and a plurality of fuses individually associated to each of the surge absorbing elements.

DISCLOSURE OF INVENTION

The object of the present invention is to provide a surge absorbing device having a shorter response time to open the circuit. According to the invention, this is achieved by the fact that each of said low melting point metal wires is in thermal contact with all of the surge absorbing elements. Thereby, the heat generated when only one surge absorbing element discharges ( further, the heat generated by a plurality of surge absorbing elements is higher ) can melt simultaneously all the low melting point metal wires so as to open the circuits of all the surge absorbing elements, and therefore, shorten the time to shut down the circuit.

The surge absorbing device of the invention having rapid response can improve the safety of a circuit using it.

"A surge absorbing element" hereinafter means "an equipment to avoid application of overvoltage and overcurrent having a gap or microgap on a portion of conductive thin film, such that discharge will occur through the gap or microgap, when overvoltage higher than a predetermined level is applied on the gap or microgap, generating a branch flow for the overvoltage or overcurrent". The conductive film having the gap or the microgap is enclosed and sealed in a gas-charged tube. Therefore, it can be called a gap or microgap surge absorbing element.

Hereinafter, "a surge absorbing device having protection function" means "a network or module including surge absorbing elements to protect a communication line, in combination with low melting point metal wires, so as to prevent overheat and fire due to the overcurrent or overvoltage on the line.

The base for the surge absorbing device can be made from resin such as epoxy resin and poly butadien type resin. A desired number of lead pins having a diameter of about 0.5 to 1.0 mm and a length of about 10 mm are mounted on the surface of the resin base. Further, the resin base has a structure on which an inorganic housing or cover glass tube can be fixed with its margin. Within the housing, gap or microgap surge absorbing elements are mounted or fixed between the lead pins. In other words, the lead pins are mounted on the resin base, and then the lead wires of the elements fix the elements, and the lower melting point metal wires are mounted on the predetermined pins, in contact with the elements.

The response time is shorter, and the heat is prevented from running out to the outside of the device, and therefore, the influence of the heat can be restrained within the space of the surge absorbing device, and does not affect the outside of the component.

The efficiency of assembling the inventive surge absorbing device can be improved by using a predetermined number of the lead pins which are previously mounted or fixed on the resin base so as to assemble or fix the surge absorbing elements within the device.

SIMPLE DESCRIPTION OF DRAWINGS

FIG. 1 shows schematically a structure of a surge absorbing device according to the present invention.

FIG. 2 shows schematically a circuit for a surge absorbing device according to the present invention, which circuit is used for loading test thereof.

FIG. 3 shows in a circuit diagram schematically how the prior art surge absorbing elements are used.

BEST MODE FOR CARRYING OUT THE INVENTION

FIG. 1 shows schematically a structure of the surge absorbing device having protection function according to the present invention. There are provided two surge absorbing elements 12 and 13 arranged and mounted on a resin base 9 to which the desired number of lead pins, in this case eight lead pins 1, 2, 3 , 4, and 5, 6 and 7 and 8, are mounted, and the two surge absorbing elements are mounted through the lead pins, and two low melting point metal wires 10 and 11 are mounted by the lead pins, and are in contact with the two surge absorbing elements, and a resin case covers wholly the structure.

The inventive surge absorbing device having protection function can be used in a connector with a telephone line, a telecopier machine, and a telephone exchanging machine, in order to protect from a surge and overvoltage and overcurrent.

The present invention is further illustrated by the following example, which should not be interpreted for the limitation of the invention.

EXAMPLE

FIG. 1 shows in schematic view a structure of an embodiment of a surge absorbing device having protection function of the present invention.

A microgap surge absorbing element 12 which has a direct current voltage of 300 V at which discharging will initiate is mounted and connected between lead pins 5 and 7 on a resin base 9, and another similar microgap surge absorbing element 13 (direct discharge initiating voltage = 300 V) is mounted and connected between lead pins 6 and 8 by spot welding.

A silver lead wire is used as a low melting point metal wire, and those two metal wires 10 and 11 are mounted between the lead pins 1 and 3 and between the lead pins 2 and 4 by soldering, so that they are in contact with the surge absorbing elements 12 and 13. Further, a resin housing is provided over the whole resin base 9, surrounding the whole structure.

The inventive surge absorbing device having protection function is assembled and connected as shown in the circuit diagram of FIG. 2, wherein the reference numbers correspond to the reference numbers of the lead pins in FIG. 1. The pins 3 and 8, and the pins 4, 5 and 6 are electrically connected, so that the surge absorbing device with protection function is connected in the circuit as shown in FIG. 2.

Then, the telephone equipment to be protected will be connected as shown in FIG. 2. Further, resistances T, R and ground G are connected as shown in FIG. 2, and the source is connected through the resistance R so that a loading test is carried out.

The above assembled surge absorbing device having protection function was tested by charging overvoltage between T+R and G, and the prior art product was tested similarly. The result is described in Table 1 below.

Herein, the reference product has the above-mentioned conventional structure, i.e. a fuse is mounted around the surface of each gap or microgap surge absorbing element, and will melt down when heated, so that the protection function is provided.

## Table 1

### Test Condition

| Applied Voltage | AC 600V | AC 600V | AC 600V |
|---|---|---|---|
| Applied Current | 40 A | 7 A | 2.2 A |
| Application Way | (T+R)–G | (T+R)–G | (T+R)–G |

### Result

**Time of opening the circuit**

| | | | |
|---|---|---|---|
| Inventive Product | 30–70 m seconds | 300–600 | 3.0–6.0 |
| Reference | 30–70 m seconds | 400–800 | 3.0–12.0 |

It is apparent from Table 1 that the inventive product evidences a significant improvement of the performance in the lower range of current applied. The lower the applied current is, the more significant the improvement is.

INDUSTRIAL UTILIZATION

The inventive surge absorbing device with a protection function to protect form overvoltage or overcurrent comprises a plurality of gap or microgap surge absorbing elements, and a plurality of low melting point metal wires each of which is in contact with all of the gap or microgap surge absorbing elements, so that they can open the circuit more rapidly than the prior art surge absorbing device.

In other words, when overvoltage or overcurrent is applied, the plurality of gap or microgap surge absorbing elements are heated, and then, such heat can rapidly melt the low melting point metal wires, and therefore, the circuits of the surge absorbing elements are rapidly opened so as to protect the circuit.

Therefore, the inventive surge absorbing device with protection function can protect equipment such as a telephone, telecopier, and telephone exchanger connected to the line, from surge and overvoltage and overcurrent, and provides improved operation performance of the surge absorbing device having protection function.

**Claims**

1.  A surge absorbing device with protection function to protect a circuit from overvoltage and overcurrent, comprising

    a plurality of gap or microgap surge absorbing elements (12,13) connected to the circuit to be protected, and a plurality of low melting point metal wires (10,11) respectively corresponding to each of the gap or microgap surge absorbing elements (12,13), characterised in that each of said low melting point metal wires (10,11) is in thermal contact with all of the gap or microgap surge absorbing elements (12,13).

2.  The surge absorbing device according to claim 1, wherein said low melting point metal wires are made of a metal having a melting point below 400 °C.

3.  The surge absorbing device according to claim 1, wherein said low melting point metal wires are made of silver lead wire.

## Patentansprüche

1. Überspannschutzvorrichtung mit einer Schutzfunktion zum Schützen einer Schaltung vor Überspannung und Überstrom, umfassend eine Vielzahl von Spalt- oder Mikrospaltüberspannungsschutzelementen (12, 13), die mit der zu schützenden Schaltung verbunden sind, und eine Vielzahl von Metalldrähten (10, 12) mit einem niedrigen Schmelzpunkt, die jeweils jedem der Spalt- oder Mikrospaltüberspannungsschutzelemente (12, 13) entsprechen, **dadurch gekennzeichnet, daß** jeder der Metalldrähte (10, 11) mit niedrigem Schmelzpunkt in thermischem Kontakt mit allen Spalt- oder Mikrospaltüberspannungsschutzelementen (12, 13) steht.

2. Überspannschutzvorrichtung nach Anspruch 1, **dadurch gekennzeichnet, daß** die Metalldrähte mit niedrigem Schmelzpunkt aus einem Metall mit einem Schmelzpunkt von weniger als 400°C hergestellt sind.

3. Überspannungsschutzvorrichtung nach Anspruch 1, **dadurch gekennzeichnet, daß** die Metalldrähte mit niedrigem Schmelzpunkt aus Silberbleidraht hergestellt sind.

## Revendications

1. Dispositif limiteur d'énergie muni d'une fonction de protection pour protéger un circuit vis-à-vis d'une surtension et d'une sur-intensité, comprenant :
une pluralité d'éléments limiteurs d'énergie à espace ou micro-espace (12, 13) connectés au circuit à protéger et une pluralité de fils métalliques à point de fusion bas (10, 11) correspondant respectivement à chacun des éléments limiteurs d'énergie à espace ou micro-espace (12, 13), caractérisé en ce que chacun desdits fils métalliques à point de fusion bas (10, 11) est en contact thermique avec tous les éléments limiteurs d'énergie à espace ou micro-espace (12, 13).

2. Dispositif limiteur d'énergie selon la revendication 1, dans lequel lesdits fils métalliques à point de fusion bas sont réalisés en un métal présentant un point de fusion inférieur à 400°C.

3. Dispositif limiteur d'énergie selon la revendication 1, dans lequel lesdits fils métalliques à point de fusion bas sont réalisés en un fil argent-plomb.

# FIG. 1

# FIG. 2

telephone

# FIG. 3

communication-equipement

priort art product

6